# EUROPÄISCHE PATENTSCHRIFT

(11) **EP 2 406 101 B1**
(45) Veröffentlichungstag und Bekanntmachung des Hinweises auf die Patenterteilung: **06.08.2014**
(21) Anmeldenummer: 10701828.5
(22) Anmeldetag: 11.01.2010
(51) Int. Cl.: B60N 2/42, B60R 21/207

(54) **HALTEVORRICHTUNG UND VERFAHREN ZUM HALTEN EINES FAHRZEUGINSASSEN IN EINEM FAHRZEUGSITZ**
HOLDING DEVICE AND METHOD FOR HOLDING A VEHICLE PASSENGER IN A VEHICLE SEAT
DISPOSITIF DE RETENUE ET PROCÉDÉ DE RETENUE D'UN PASSAGER D'UN VÉHICULE DANS UN SIÈGE

(30) Priorität: 10.03.2009 DE 102009001426
(43) Veröffentlichungstag der Anmeldung: 18.01.2012
(73) Patentinhaber: Robert Bosch GmbH, 70442 Stuttgart (DE)
(72) Erfinder: FREIENSTEIN, Heiko, 71263 Weil Der Stadt (DE); SCHRADER, Jens, 76530 Baden-Baden (DE)
(86) Internationale Anmeldenummer: PCT/EP2010/050189
(87) Internationale Veröffentlichungsnummer: WO 2010/102843

(56) Entgegenhaltungen:
- EP-A2- 1 612 095
- EP-A2- 1 767 397
- WO-A1-2007/073944
- DE-A1- 4 305 295
- DE-C1- 10 043 290
- FR-A1- 2 910 853

## Beschreibung

### Stand der Technik

Die vorliegende Erfindung betrifft eine Haltevorrichtung zum Halten eines Fahrzeuginsassen in einem Fahrzeugsitz gemäß Anspruch 1 sowie ein Verfahren zum Halten eines Fahrzeuginsassen in einem Fahrzeugsitz gemäß Anspruch 12.

In jüngster Zeit werden zunehmende Anforderungen an die Sicherheit von Fahrzeuginsassen in Personenkraftwagen gestellt. Dies ergibt sich aus höheren gesetzlichen Anforderungen für die entsprechende Personensicherheit als auch aus schwieriger zu bestehenden-Verbrauchertests von entsprechenden Verbraucherschutzorganisationen. Spezielles Augenmerk wird dabei insbesondere auf das Verletzungsrisiko des Brustkorbes eines Fahrzeuginsassen gelegt, da sich in diesem Körperbereich empfindliche innerer Organe befinden, die nicht besonders gut geschützt sind.

Um einen größtmöglichen Schutz dieser Körperteile sicherzustellen, werden im Stand der Technik oftmals Airbags in Form als Frontalairbag, Seitenairbag oder Kopfairbag eingesetzt. Diese Airbags funktionieren aber nur dann optimal, wenn sich der Fahrzeuginsasse in einer vorbestimmten Position befindet und durch die beim Unfall auftretenden Kräfte nicht aus dieser Position gebracht wird. Um den Insassen in dieser Position zu halten wird oftmals ein Sicherheitsgurt verwendet, der den Fahrzeuginsassen auf der entsprechenden vorbestimmten Position im Fahrzeugsitz halten soll. Dabei ist jedoch anzumerken, dass dieser Sicherheitsgurt, der meist als 3-Punkt-Sicherheitsgurt ausgelegt ist, einen großen Bereich des Oberkörpers abgedeckt und diesen somit fixiert, allerdings ist im Falle eines Seitenaufpralls oder bei extremen Insassen-Sitzposen die Wirksamkeit des Gurtes begrenzt: Bei einem Unfall kann der Fahrzeuginsasse seitlich oder nach vorne unter dem Sicherheitsgurt hindurch vom Fahrzeugsitz rutschen, so dass sich der Fahrzeuginsasse kurz nach einem Unfall nicht mehr im optimalen Wirkungsfeld des oder der Airbags befindet.

Um ein solches seitliches Wegrutschen zu verhindern wird in der WO 2004103779 A1 ein aktiver Sitz vorschlagen, der in Abhängigkeit von einer Sensorik (beispielsweise einer Überwachung des Umfelds des Fahrzeugs) angesteuert wird. Wird beispielsweise ein sich annäherndes Fahrzeug kann bzw. eine Kollision eines Objektes mit dem eigenen Fahrzeug detektiert, kann eine in dem Sitz verbaute Seitenwange reversibel elektrisch, pneumatisch oder durch ein Federgetriebe aufgestellt oder vorgefahren werden. Allerdings kann durch diese ausgefahrene Seitenwange ein Fahrzeuginsasse noch immer seitlich bzw. nach vorne unter dem Sicherheitsgurt hindurch rutschen.

DE10043290 offenbart eine Vorrichtung zum Schutz der Insassen eines Fahrzeuges nach dem Oberbegriff des Anspruchs 1 bzw. ein Verfahren zum Halten eines Fahrzeuginsassen in einem Fahrzeugsitz nach dem Oberbegriff des Anspruchs 11.

Aufgabe der vorliegenden Erfindung ist, eine Haltevorrichtung zu schaffen, die einen verbesserten Insassenschutz bietet, bei der es bedenkenlos möglich ist die Haltevorrichtung frühzeitig bzw. in einer Phase, die vor dem eigentlichen Aufprall liegt, auszulösen, ohne das dadurch zusätzliche kosten entstehen.

### Offenbarung der Erfindung

Vor diesem Hintergrund wird mit der vorliegenden Erfindung eine Haltevorrichtung, weiterhin ein Verfahren zum Halten, ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft eine Haltevorrichtung zum Halten eines Fahrzeuginsassen in einem Fahrzeugsitz, wobei sich der Schwerpunkt des Fahrzeuginsassen in einem vorbestimmten Schwerpunktbereich über einer Fahrzeugsitzfläche befindet, wenn der Fahrzeuginsasse auf dem Fahrzeugsitz sitzt und wobei die Haltevorrichtung die folgenden Merkmale umfasst:
- ein Halteelement, das ausgebildet ist, um den Fahrzeuginsassen bei einem Unfall des Fahrzeugs in einer vorbestimmten Position auf dem Fahrzeugsitz zu halten; und
- eine Positionierungseinheit, die ausgebildet ist, um ansprechend auf ein Aktivierungssignal das Halteelement von einer Ausgangsposition in eine Zielposition seitlich des Fahrzeugsitzes zu bringen, wobei das Halteelement in der Zielposition in einer Höhe über der Fahrzeugsitzfläche angeordnet ist, so dass es in der Zielposition den Schwerpunktbereich seitlich zumindest teilweise überdeckt. Die Positionierungseinheit ist ausgebildet, um das Halteelement aus der Zielposition wieder in die Ausgangsposition zurückzubringen.

Ferner schafft die Erfindung ein Verfahren zum Halten eines Fahrzeuginsassen in einem Fahrzeugsitz, wobei sich der Schwerpunkt des Fahrzeuginsassen in einem vorbestimmten Schwerpunktbereich über einer Fahrzeugsitzfläche befindet, wenn der Insasse auf dem Fahrzeugsitz sitzt und wobei das Verfahren den folgenden Schritt umfasst:
- Ausfahren eines Halteelementes aus einer Ausgangslage in eine Zielposition, ansprechend auf ein Aktivierungssignal, wobei das Ausfahren derart erfolgt, dass das Halteelement in eine Zielposition seitlich des Fahrzeugsitzes gebracht wird und wobei das Halteelement in der Zielposition in einer Höhe über der Fahrzeugsitzfläche angeordnet wird, so dass es in der Zielposition den Schwerpunktbereich seitlich zumindest teilweise überdeckt.
- Zurückbringen des Halteelements aus der Zielposition in die Ausgangslage.

Auch schafft die Erfindung ein Verfahren zum Auslösen eines Rückhaltemittels zur Sicherung eines Fahrzeuginsassen bei einem Unfall, wobei das Verfahren die folgenden Merkmale umfasst:
- Erfassen einer Position eines Halteelementes, welches ausgebildet ist, um bezüglich des Fahrzeugsitzes in eine seitliche Zielposition in einer Höhe über der Fahrzeugsitzfläche gebracht zu werden, in welcher sich ein Schwerpunkt des Fahrzeuginsassen befindet; und
- Steuern des Auslösens des Rückhaltemittels unter Verwendung der erfassen Position des Halteelementes.

Die vorliegende Erfindung basiert auf der Erkenntnis, dass ein effektiver Schutz eines Insassen gegen einen seitliches oder nach vorne gerichtetes Herausrutschen unter einem Sicherheitsgurt dann verbessert werden kann, wenn ein Halteelement seitlich an oder in dem Insassensitz positioniert ist oder herausfahren wird, so dass sich das Halteelement in einer Zielposition in einer Höhe seitlich neben dem Insassensitz befindet in der sich der Schwerpunkt des Fahrzeuginsassen (welcher beispielsweise im Thorax lokalisiert ist) befindet. Hierdurch kann der Fahrzeuginsasse effektiv in der gewünschten Position auf dem Fahrzeugsitz gehalten werden, so dass die primären Sicherheits- bzw. Rückhaltemittel wie beispielsweise ein Airbag optimal wirken können. Das Anordnung des Halteelements in einer Höhe über der Sitzfläche des Fahrzeugsitzes in der sich üblicherweise der Schwerpunkt des Fahrzeuginsassen befindet unterstützt damit weitere Sicherheitsmittel wie beispielsweise den Sicherheitsgurt an denjenigen Stelle, an der bei einem Unfall durch die Schwerpunktanlage des Fahrzeuginsassen eine hohe Kraft wirkt, die möglicherweise durch das weitere (bei der Fahrt bequem zu tragende) Sicherheitsmittel nicht ausreichend aufgefangen werden kann. Möglich ist jedoch auch, allein die Haltevorrichtung im Beckenbereich des Fahrzeuginsassen zu Positionieren, da durch die erfindungsgemäße Haltevorrichtung der Großteil der bei einem Unfall auf den Fahrzeuginsassen im Bereich seines Schwerpunkt wirkenden Kräfte abgefangen werden kann. Bei der Auslegung der hier vorgeschlagenen Haltevorrichtung kann dabei ausgenutzt werden, dass sich der Schwerpunkt von Fahrzeuginsassen (beispielsweise gemittelt über eine durchschnittliche Größe von erwachsenen Personen in Deutschland oder Europa) meist in einem sehr engen Bereich bewegt, so dass das Anordnen des Halteelementes in der Zielposition in einem relativ eng begrenzten Bereich zu erfolgen braucht. Beispielsweise kann sich diese Zielposition in einer Höhe von 10 bis 45 cm über der Sitzfläche eines Fahrzeugsitzes seitlich neben dem Fahrzeugsitz befinden. Um das Halteelement in eine solche Zielposition zu bringen, kann es beispielsweise.aus Seitenflanken der Sitzfläche oder aus Seitenflanken der Rückenlehne des Fahrzeugsitzes ausgefahren werden. Auch ermöglicht die vorliegende Erfindung eine Berücksichtigung eines ausgefahrenen Halteelementes bzw. seiner aktuellen Position bei der Auslösung eines Rückhaltemittels. So kann beispielsweise eventuell ein Seitenairbag abgeschaltet werden, wenn durch die aktuelle Position des Halteelementes sichergestellt werden kann, dass der Fahrzeuginsassen nicht von der vorgesehenen Position im Fahrzeugsitz rutschen kann und die Wirkung des Frontalairbags optimal ist. Dies würde wiederum Kosten sparen, da nach einem Unfall beispielsweise lediglich der Frontairbag ausgetauscht werden braucht und die Seitenverkleidung nicht mit einem neuen Seitenairbag versehen werden muss.

Die vorliegende Erfindung bietet somit den Vorteil, dass eine deutliche Verbesserung beim Fixieren des Fahrzeuginsassen in dem Fahrzeugsitz möglich ist, so dass der Fahrzeuginsasse nicht mehr seitlich oder nach vorne unter dem Sicherheitsgurt hindurch rutschen kann. Dies ermöglicht wiederum eine Verbesserung der Einsatzmöglichkeit von weiteren Sicherheits- oder Rückhaltemittel, so dass sich insgesamt die Sicherheit eines Fahrzeuginsassen bei einem Unfall erhöht. Außerdem kann durch das Verhindern von Auslösungen von nicht benötigten irreversiblen Rückhaltemitteln eine Kostenreduktion bei der Reparatur des Fahrzeugs nach einem Unfall ermöglicht werden.

In einer besonderen Ausführungsform der Erfindung kann die Positionierungseinheit ausgebildet sein, um das Halteelement in eine Zielposition zu bringen, so dass das Halteelement in der Zielposition den Schwerpunktbereich seitlich zumindest teilweise überdeckt, in dem sich der Schwerpunkt von zumindest 80 Prozent, insbesondere von mindestens 95 Prozent, der als Fahrzeuginsassen auf dem Fahrzeugsitz in Betracht kommenden Personen befindet. Eine derartige Ausführungsform der Erfindung bietet den Vorteil, dass nahezu alle Fahrzeuginsassen von der durch die Haltevorrichtung ermöglichten Erhöhung der Sicherheit profitieren können. Das Halteelement deckt somit nahezu vollständig denjenigen Bereich ab, in dem üblicherweise der Schwerpunkt des Fahrzeuginsassen angeordnet ist, so dass der Fahrzeuginsasse bei einem Unfall mit sehr hoher Wahrscheinlichkeit nicht mehr aus der gewünschten vorbestimmten Position auf dem Fahrzeugsitz wegrutschen kann. Dabei ist insbesondere von einer Lage des Schwerpunktes eines erwachsenen Insassen auszugehen, so dass sich die Schwerpunktlage von einem bestimmten Anteil der betreffenden Insassen aus den amtlichen Statistiken über die Bevölkerungsgröße (beispielsweise in Deutschland oder in Europa) bestimmen lässt.

Auch kann die Positionierungseinheit ausgebildet sein, um das Halteelement in einer Bewegung mit einer gekrümmten Trajektorie, insbesondere in einer sichelförmigen Bewegung in die Zielposition zu bringen. Eine derartige Ausführungsform der vorliegenden Erfindung bietet den Vorteil, dass eine mögliche Bewegung des Fahrzeuginsassen bei einem Unfall sanft abgefangen werden kann und der Fahrzeuginsasse nicht gegen ein sich plötzlich in seinem Bewegungsweg befinden des Objekt aufprallt.

Auch kann die Positionierungseinheit ausgebildet sein, um das Halteelement in einer ersten Bewegung von dem Fahrzeugsitz weg zu bewegen und in einer zweiten Bewegung wieder zum Fahrzeugsitz hin zu bewegen, wobei sich zumindest ein Teil des Halteelementes nach der zweiten Bewegung in der Zielposition befindet, um den Insassen in der vorbestimmten Position zu halten. Auch eine solche Ausführungsform der vorliegenden Erfindung ermöglicht das sanfte Abgefangen des Insassen, wobei beispielsweise zunächst das Halteelement aus einer Seitenwange der Rückenlehne des Fahrzeugsitzes in Richtung einer Fährzeugtüre nach schräg vorne ausgefahren wird und nachfolgend in Richtung des Thorax des Fahrzeuginsassen zurückgeklappt wird. Eine ähnliche Bewegung kann aus der Seitenwange des Sitzkissens heraus erfolgen, um den Insassenhalt weiter zu verbessern. Hier wird die Haltevorrichtung aus der Sitzfläche nach schräg oben verfahren und im zweiten Teil der Bewegung zu den Oberschenkeln bewegt.

Ferner kann auch in einer anderen Ausführungsform der vorliegenden Erfindung die Positionierungseinheit ausgebildet sein, um das Halteelement nacheinander in zwei unterschiedliche Richtungen zu bewegen. Eine derartige Ausführungsform der vorliegenden Erfindung bietet den Vorteil, dass das Halteelement unterschiedlich schnell in die beiden unterschiedlichen Richtungen bewegt werden kann. Dies ermöglicht ein schnelles Ausfahren des Halteelements in eine erste Richtung, um das Halteelement möglichst nahe an die Zielposition heranzuführen. Hiernach kann in einer langsameren Bewegung das Halteelement in die endgültige Position gebracht werden, wobei ein besonders starkes Augenmerk auf ein sanftes Abfangen des Fahrzeuginsassen gelegt werden kann.

Um ein schnelles Verbringen des Halteelementes in die Zielposition sicherzustellen, kann die Positionierungseinheit ausgebildet sein; um das Halteelement aus einer Rückenlehne oder einer Sitzfläche des Fahrzeugsitzes auszufahren. Wenn das Halteelement bereits im Fahrzeugsitz in einer Ausgangslage vorgehalten wird, kann es sehr schnell in die seitliche Zielposition nahe dem Insassen ausgefahren werden.

Auch kann die Positionierungseinheit ausgebildet sein, um das Halteelement in der Zielposition derart zu positionieren, dass es eine dem Insassen zugewandten Flanke aufweist, die in Bezug zur Fahrzeugsitzfläche in einem Winkel von mehr als 45 Grad, insbesondere in einem Winkel von mehr als 80 bis 90 Grad angeordnet ist. Eine derartige Ausführungsform der vorliegenden Erfindung bietet den Vorteil, dass durch die sehr steile bis nahezu rechtwinklige Flanke des Halteelements in Sitzkissen und Rückenlehne ein Wegrutschen des Fahrzeuginsassen von der Sitzfläche und ein Neigen des Oberkörpers des Fahrzeugsitzes sehr gut verhindert werden kann. Hierbei kann insbesondere eine Seitenflanke des Fahrzeugsitzes ausgefahren werden, wobei mit einem größeren Winkel der Flanke des Halteelements auch die Kraft größer wird, die notwendig ist, den Fahrzeuginsassen an dieser Flanke hinauf zu bewegen. In einer derartigen Ausführungsform kann somit der Fahrzeuginsasse sehr sanft abgefangen werden, da sich beim Ausfahren des Halteelement ist dieser Winkel zunehmend vergrößert und schließlich das Halteelement im ausgefahrenen Zustand den Fahrzeuginsassen entweder in die ursprüngliche Position zurück drückt oder doch zumindest ein weiteres Wegrutschen effektiv verhindert.

Günstig ist es auch, wenn die Positionierungseinheit ausgebildet ist, um das Halteelement in einer Zeitspanne von höchstens 2 Sekunden, insbesondere in einer Zeitspanne von höchstens 800 Millisekunden von einer Ausgangslage in die Zielposition zu bringen. Eine derartige Ausführungsform der vorliegenden Erfindung bietet den Vorteil, dass das Halteelement nach dem Auftritt eines Unfalls rechtzeitig in die Zielposition verbracht werden kann und somit seine optimale Schutzwirkung erzielt. Dies wird in Verbindung beispielsweise mit geeigneter Sensorik (Inertialsensorik oder vorausschauender Sensorik) erreicht, die bereits vor Kontakt mit dem Unfallgegner die Positionierungseinheit auslöst.

Um eine frühzeitige Aktivierung der Haltevorrichtung zu ermöglichen, die bei einer möglichen Fehlauslösung keine unnötigen Kosten verursacht, kann auch die Positionierungseinheit ausgebildet sein, um das Halteelement aus der Zielposition wieder in eine Ausgangsposition zurückzubringen. Eine derartige Ausführungsform bietet den Vorteil, dass durch das frühzeitige Ausfahren des Halteelementes zu einem Unfallzeitpunkt bereits ein guter Schutz des Insassen gegeben ist und die weiteren Sicherheitsmittel optimal wirken können. In diesem Fall kann auch die Auslösezeit für die irreversiblen Rückhaltemittel länger gewählt werden, so dass durch diese längere Zeitspanne eine sicherere Erkennung eines tatsächlich auftretenden Unfalls möglich ist. Werden nämlich die irreversiblen Rückhaltemittel zu früh und unnötig ausgelöst, entstehen deutlich höhere Kosten für die Reparatur des Fahrzeugs.

Ferner ist es gemäß einer weiteren Ausführungsform der Erfindung möglich, dass die Positionierungseinheit ausgebildet sein kann, um beim Ausfahren des Halteelementes einen Widerstand gegen das Ausfahren zu detektieren und das weitere Ausfahren oder Stoppen des Ausfahrens des Halteelementes auf der Basis des erfassten Widerstandes durchzuführen. Eine derartige Ausführungsform der vorliegenden Erfindung bietet den Vorteil, dass ein mögliches Einklemmen von Insassen auf dem Insassensitz oder ein Misuse-Fall erkannt und verhindert werden kann.

Günstig ist es auch, wenn die Haltevorrichtung ferner ein zweites Halteelement aufweist, das ausgebildet ist, um den Fahrzeuginsassen in einer vorbestimmten Position auf dem Fahrzeugsitz zu halten und wobei die Positionierungseinheit ferner ausgebildet ist, um ansprechend auf das Aktivierungssignal das zweite Halteelement in eine der Zielposition bezüglich des Fahrzeugsitzes gegenüberliegende zweite Zielposition seitlich des Fahrzeugsitzes zu bringen, wobei sich das zweite Halteelement in der zweiten Zielposition in einer Höhe über der Fahrzeugsitzfläche befindet, so dass es in der zweiten Zielposition den Schwerpunktbereich seitlich zumindest teilweise überdeckt. Eine derartige Ausführungsform der vorliegenden Erfindung mit beidseitig zum Fahrzeugsitz angeordneten Halteelementen bietet den Vorteil, dass der Fahrzeuginsasse sehr gut in der vorbestimmten Position gehalten werden kann und nicht durch ein Schleudern in verschiedene Richtungen durch die Kräfte zum Zeitpunkt des Unfalls und kurz danach aus dieser Position wegrutscht.

Die Erfindung wird nachstehend anhand der beigefügten Zeichnungen beispielhaft näher erläutert. Es zeigen:
- Fig. 1: ein Blockschaltbild eines Insassenschutzsystems eines Fahrzeugs mit Sensoren, Rückhaltemitteln und der erfindungsgemäßen Haltevorrichtung gemäß einem Ausführungsbeispiel der vorliegenden Erfindung;
- Fig. 2: eine Darstellung eines Zusammenwirkens der unterschiedlichen Sicherheits- bzw. Rückhaltemittel und einer Wirkung dieser Mittel auf einen Insassen;
- Fig. 3: eine bildliche Darstellung eines ersten Ausführungsbeispiels der vorliegenden Erfindung als Haltevorrichtung;
- Fig. 4a -b: schematische Darstellungen des Angriffs von Kräften auf das Halteelement während des Ausfahrens des Halteelementes zu verschiedenen Zeitpunkten eines Unfalls;
- Fig. 5a-b: schematische Darstellungen eines weiteren Ausführungsbeispiels der vorliegenden Erfindung als Haltevorrichtung in unterschiedlichen Positionen beim Ausfahren des Halteelementes während eines Unfalls;
- Fig. 6: ein Ablaufdiagramm eines Ausführungsbeispiels der vorliegenden Erfindung als Verfahren; und
- Fig. 7: ein Ablaufdiagramm eines weiteren Ausführungsbeispiels der vorliegenden Erfindung als Verfahren.

Gleiche oder ähnliche Elemente können in den nachfolgenden Figuren mit gleichen oder ähnlichen Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Nachfolgend genannte Dimensionen und Maße dienen nur der Veranschaulichung der Beschreibung der Erfindung und sind nicht dahingehend zu verstehen, dass die Erfindung auf diese Maße und Dimensionen eingeschränkt ist.

Der hier vorgeschlagen Ansatz soll im Falle eines Unfalls eine Schutzwirkung für die einen Insassen bieten und darüber hinaus die Schutzwirkung anderer Systeme unterstützen und verbessern. Sowohl für den Fall eines Seitenaufpralls (an der Crash-Seite und an der dem Insassen abgewandten Seite ,Far-side') als auch in Situationen eines Frontal- oder Heckaufpralls oder einer Überschlagsituation soll der hier vorgeschlagene Ansatz dazu beitragen, dass der Insasse solange wie möglich in einer optimalen Position gehalten wird. Auf diese Weise wird der konstruktionsbedingt vorgesehene Überlebensraum vollständig genutzt und alle Rückhalte- und Sicherheitssysteme können ihre Wirkung optimal entfalten.

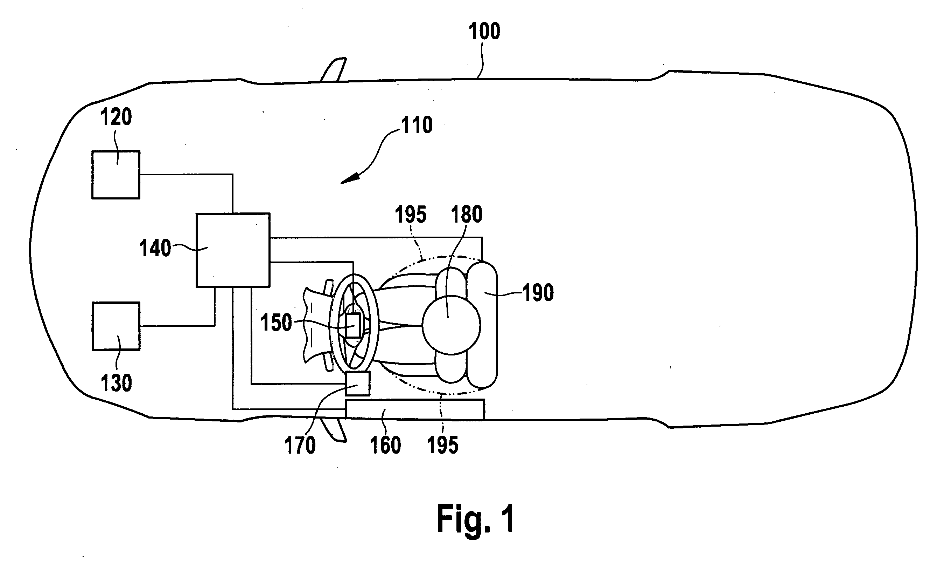

In Fig. 1 ist zur übersichtlichen Darstellung der Erfindung im Zusammenwirken mit weiteren Komponenten ein Blockschaltbild eines Insassenschutzsystems 110 eines Fahrzeugs 100 dargestellt, welches die Haltevorrichtung gemäß einem Ausführungsbeispiel der vorliegenden Erfindung umfasst. Das Insassenschutzsystem 110 umfasst beispielsweise mehrere Sensoren zur Erfassung einer Umgebungssituation, die beispielsweise als Radarsensor 120 zur Erfassung einer Annäherung eines Fremd-Fahrzeugs oder ein Beschleunigungssensor 130 zur Erfassung eines Stoßes bei einem Aufprall des Fremd-Fahrzeugs auf das (Ego-) Fahrzeug 100 bereitgestellt. Die Signale der beiden Sensoren 120 und 130 können in einer Auswerteeinheit 140 bzw. einem Steuergerät verarbeitet werden, welches dann die entsprechenden Sicherheitsmittel aktiviert. Als Sicherheitsmittel kann beispielsweise, je nach erforderlicher Situation, ein Frontairbag 150 in einem Lenkrad oder aus der Instrumenten Konsole des Fahrzeugs 100, ein Seitenairbag 160 in einer Türe oder dem Sitz des Fahrzeugs 100 oder ein Kopfairbag 170 in einem Dachholm des Fahrzeugs 100 ausgelöst werden, um einen Aufprall des Fahrzeuginsassen 180 an entsprechenden Strukturelementen des Fahrzeugs 100 zu verhindern. Um jedoch einen Wegrutschen des Fahrzeuginsassen 180 aus dem Fahrzeugsitz 190 zu verhindern, kann eine nachfolgend näher beschriebene Haltevorrichtung 195 aktiviert werden, die seitlich zum Fahrzeugsitz 190 ausgefahren wird und den Fahrzeuginsassen 180 in einer optimalen Position für die Airbags 150,160 und 170 hält, damit der Fahrzeuginsasse 180 möglichst zentral und optimal ausgerichtet in die entsprechenden aufgeblasen der Airbags fällt und ein seitliches Abrutschen von den entsprechenden Airbags vermieden werden kann.

Der hier vorgestellte Ansatz kann beispielsweise als Weiterentwicklung der in der Beschreibung des Standes der Technik angegebenen Möglichkeiten angesehen werden. In Abhängigkeit von einem Signal, welches beispielsweise von der in Fig. 1 dargestellten Auswerteeinheit 140 ausgegeben wird, kann die Haltevorrichtung 195 in Form einer Fahrzeugsitz-Seitenwange in Sitzfläche und Lehne realisiert sein, die vor dem eigentlichen Aufprall eines Fremdfahrzeugs auf das eigene Fahrzeug ausgefahren wird, so dass der laterale Seitenhalt des Insassen 180 verbessert wird. Als Sensorik, die der entsprechenden Auswerteeinheit 140 die entsprechenden Unfallsignale bereitstellen, kommen neben den in Figur 1 dargestellten Sensoren 120 und 130 noch weitere Sensoren in Betracht, die beispielsweise zur Umfelderfassung Radar, Video, Stereo-Video, Range Video (PMD / Time of Flight) Ultraschall oder Lidar einsetzen. Er ist auch eine Auslösung der Haltevorrichtung durch eine reversible Aktuatorik auf der Basis einer Inertialsensorik und einer Fahrzeugdynamik-Sensorik sehr vorteilhaft.

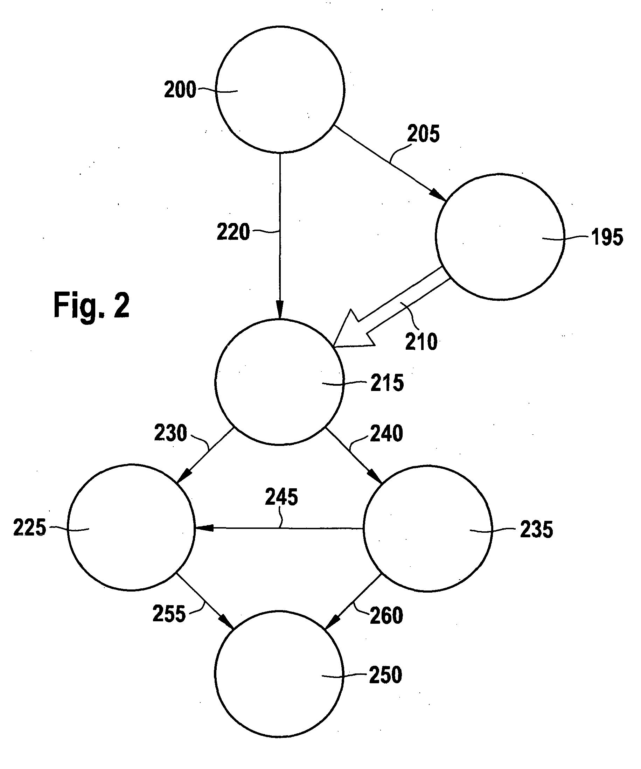

Die nachfolgend näher vorgestellte Haltevorrichtung (die in der weiteren Beschreibung auch als ESA = Enveloping Side Adjustment = einschließende Seiten-Anpassung bezeichnet wird) bildet zusammen speziell mit bereits vorhandenen Rückhaltesystemen eine Wirkungsverbesserung dieser Rückhaltesysteme, wie sie in einer in Fig. 2 dargestellten "Choreographie der Rückhaltesysteme" eines Seitenaufpralls eines Fremd-Fahrzeugs auf das eigene Fahrzeug schematisch dargestellt ist. Der Wirkungszusammenhang und die systembedingten Vorteile können aus der Darstellung der Fig. 2 entnommen werden und lassen sich wie folgt beschreiben.

Zunächst sind als Rückhaltemittel der Sitz und ein Sicherheitsgurt 200, ein Torso-Airbag, ein Kopfairbag sowie die ESA bzw. Haltevorrichtung 195 vorgesehen. Die Einführung der Haltevorrichtung 195 wird durch den Gurt 200 unterstützt (Pfeil 205) und hemmt sehr stark (Pfeil 210) eine laterale Insassenbewegung 215 zur Einschlagseite des Fremd-Fahrzeugs auch der Gurt 200 hemmt in einer gewissen Weise, jedoch nicht so stark, die laterale Insassenbewegungen 215, was durch den Pfeil 220 symbolisiert wird. Eine solche laterale Insassenbewegungen 215 würde eine Überlebenszone 225 deutlich verkleinern, was durch den Pfeil 230 symbolisiert wird. Durch die laterale Insassenbewegungen 215 würde auch die effektive Wirkung des Airbags 235, insbesondere dessen wirksames Volumen, beschränkt werden (entsprechend Pfeil 240), wobei jedoch ein großer Airbag 235 die Überlebenszone 225 vergrößern würde (entsprechend Pfeil 245). Eine große Überlebenszone 225 reduziert jedoch die Verletzungsschwere 250 (entsprechend dem Wirkungszusammenhang nach Pfeil 255) und auch ein großes Airbagvolumen 235 vermindert die entsprechende Verletzungsschwere 250 (entsprechend Pfeil 260).

Die Einführung der Haltevorrichtung 195 führte somit über die Hemmung der lateralen Insassenbewegungen zu einer verbesserten Schutzwirkung durch die übrigen Rückhaltemittel. Weiterhin besteht die Möglichkeit, dass die Haltevorrichtung auch eine Verbesserung der Wirkung des Seitenairbags ermöglicht, welcher dann ein größeres wirksames Volumen bietet.

Gegenüber dem Stand der Technik ist in der hier vorgestellten Haltevorrichtung die konkrete Trajektorie der Seitenwange als Haltevorrichtung speziell in den Aspekten Richtung, Weg, Winkel der Anschmiegung und Überlagerung der Translation mit der pneumatischen Einfassung) besonders hervorzuheben, insbesondere geht der Weg weit über den typischen Weg des Halteelementes gemäß dem Stand der Technik hinaus und fixiert den Insassen im Fahrzeugsitz. Weiterhin ist eine detaillierte Beschreibung der Ausführung der Seitenwange inklusive der Aktuatorik und Lagesensorik vorliegend neu beschrieben. Zusätzlich erfolgen eine Kraftbegrenzung der Seitenwange sowie eine Beschreibung der Wechselwirkung mit dem restlichen Rückhaltesystem und ein Algorithmus zur dynamischen Anpassung des Gesamtrückhaltesystems.

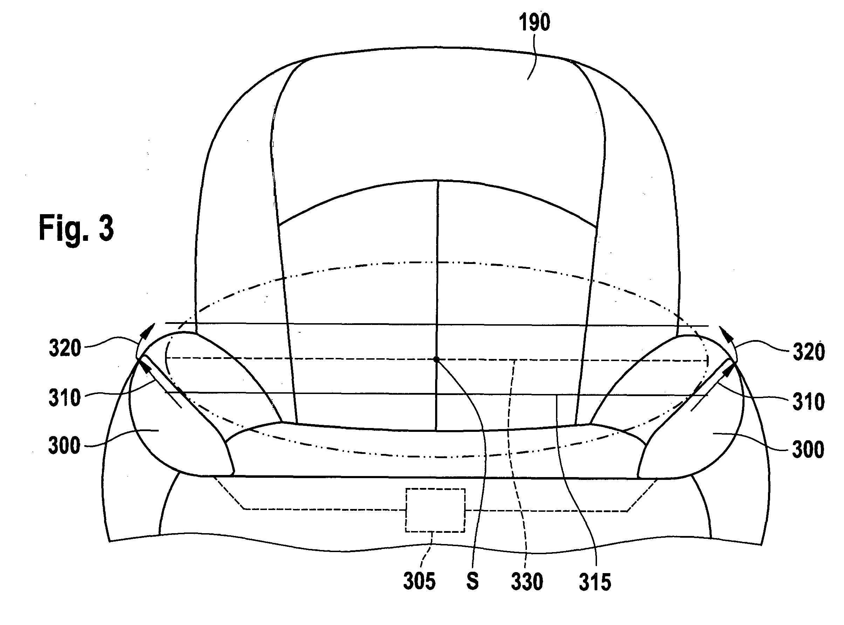

In der nachfolgenden Beschreibung wird das Wirkungsprinzip des hier vorgestellten Ansatzes näher beschrieben. Im Komfortbetrieb können die Aktuatoren der Haltevorrichtung vom Insassen manuell oder aber auch automatisiert oder teilautomatisiert an die Erfordernisse eines komfortablen Fahrens angepasst werden. Als Beispiel kann ein fahrdynamischer Seitenhalt oder eine aktive Lehnenbreiten-Verstellung bei bekannten Fahrzeugen der Oberklasse angeführt werden, die ebenfalls bei Fahrzeugsitzen mit der Haltevorrichtung eingesetzt werden können. Im Falle einer Precrash-Detektion (d.h. einer Detektion eines unmittelbar bevorstehenden Unfalls bevor der eigentliche Unfall stattgefunden hat) werden die Seitenwangen 300 (als Halteelement der Haltevorrichtung) des Sitzes in einer Weise ausgefahren, dass der Insasse nicht aus dem Sitz herausgeschoben wird, sondern vielmehr eine zusätzliche seitliche Abstützung erfährt. Das Verfahren erfolgt in einer oder in mehreren Phasen. Es können die Seitenwangen 300 der Lehne und/oder die Seitenwangen der Sitzfläche gemeinsam oder, je nach Gefahrensituation, auch einzeln (durch eine im Fahrzeugsitz 190 verborgene und deshalb in Fig. 3 gestrichelt dargestellte Positionierungseinheit 305) verfahren bzw. bewegt werden, wie dies aus der bildlichen Darstellung gemäß Fig. 3 ersichtlich ist. Die Positionierungseinheit 305 kann eine elektromotorische oder pneumatische Einheit sein, die die Halteelemente 300 in verschiedene Richtungen bewegen und verstellen kann. Zunächst kann die Seitenwange 300 (bzw. beide Seitenwangen 300 entweder gleichzeitig oder zeitlich versetzt) in eine erste Richtung 310 bewegt werden, um nachfolgend in eine zweite Richtung 320 in Richtung des Insassen gefahren werden. Als Aktuatoren der Positionierungseinheit 305 sind grundsätzlich alle geeigneten Maschinenelemente einzeln oder in Kombination denkbar wie beispielsweise ein Elektromotor mit Zahnstange/Kurvenscheibe, pneumatische Zylinder und/oder Blasen, Federelemente mit elektromagnetischer oder einem anderen Auslösemechanismus.

Die Wirkungsweise kann anhand der folgenden Darstellung aus Fig. 3 am Beispiel der Sitzflächen-Seitenwangen 300 verdeutlicht werden. Jedoch kann die Fig. 3 auch dahingehend interpretiert werden, dass die abgebildeten Seitenwangen 300 Seitenwangen einer Rückenlehne des Fahrzeugsitzes (in Aufsichtsdarstellung) sind, wobei die Wirkungsweise der Erfindung in beiden Szenarios gleichartig ist.

Da aus Komfortgründen die Seitenwangen 300 elastisch sind, ist die wirksame Rückhaltegeometrie beim Umfall wesentlich kleiner als die Geometrie der Seitenwangen im Ruhezustand. Der Schwerpunkt S des Oberkörpers eines Fahrzeuginsassen befindet sich typischerweise bei konventionellen Sitzen außerhalb der wirksamen Rückhaltegeometrie in einem speziellen Schwerpunktbereich 330. Hierbei kann ausgenutzt werden, dass sich der Schwerpunkt S bei verschiedenen im Fahrzeugsitz sitzenden Personen in einem sehr engen Bereich über der Fahrzeugsitzfläche befindet, so dass von einem kleinen Schwerpunktbereich 330 (der in Fig. 3 als Linie 330 dargestellt ist) ausgegangen werden kann. Beispielsweise kann diese Höhe des Schwerpunktes S des Insassen bzw. der Schwerpunktbereich in etwa 10 bis 30 cm (jedoch manchmal auch bis zu 60 cm) über der Sitzfläche des Fahrzeugsitzes liegen. Der Schwerpunkt S des Insassen kann weiterhin auch in einem Abstandsbereich von 10 bis 30 cm von der Rückenlehne des Fahrzeugsitzes entfernt liegen.

Im Falle eines Seitencrashs wird der Insasse gemäß dem Stand der Technik nur ungenügend gehalten (da die Seitenwange 300 lediglich soweit ausfährt, dass sie einen Bereich bis zur Markierung 315 überdeckt). Somit rutscht der Insasse die Kontur einer Seitenwange 300 herauf oder dreht sich über diese aus dem Sitz 190 heraus. Wird die Seitenflanke 300 jedoch erfindungsgemäß vor dem Crash weiter.ausgefahren, so dass sie den Schwerpunktbereich 330 überdeckt (wie dies aus Fig. 3 nach der Ausführung der zweiten Bewegung 320 erfolgt ist) liegt der Oberkörper-Schwerpunkt S des Insassen innerhalb der wirksamen Rückhaltegeometrie. Der Schwerpunktbereich kann dabei einen Bereich umfassen der in Fig. 3 zwischen den durchgezogenen Linien unter und über dem Schwerpunkt S dargestellt ist; kann aber auch entsprechend kleiner sein, und sich im Wesentlichen um die in Fig. 3 gestrichelte dargestellte Linie 330 erstreckt. Wird die Seitenwange 300 zudem noch steiler aufgestellt, kann die gesamte Bewegungsenergie des Insassen aufgenommen und der Oberkörper in seiner Position gehalten werden.

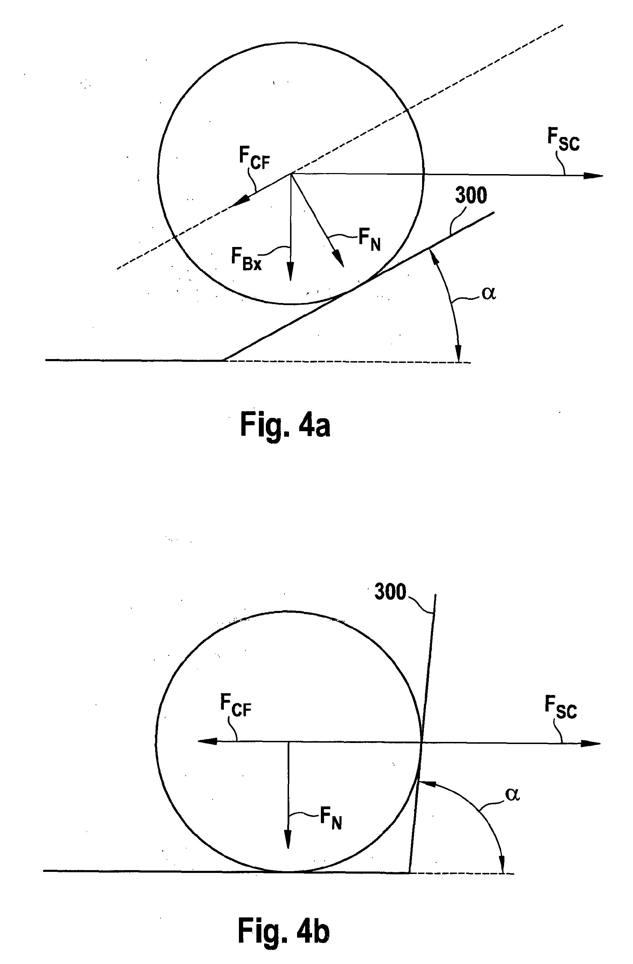

Unterstützend für diese Funktion ist die Wirkung eines Gurtes mit vorzugsweise einem Gurtstraffer. Dieser hält den Insassen zurück, sodass der Schwerpunkt S hinter der Rückhaltegeometrie der Seitenwangen verbleibt und zusätzlich die Reibung zwischen Insasse und Sitzlehne beschleunigungsvermindernd wirken kann. In der vorliegenden Erfindung wird ein (crashfester) Winkel α zwischen Seitenwangenoberfläche 300 und Sitzfläche (bzw. Rückenlehne) größer als 45° angestrebt, wie dies in Fig. 4a angedeutet sein soll. In dieser Darstellung ist erkennbar, dass bei einer Kraft F_{SC} durch einen Seitenaufprall, eine Normalkraft F_{N} und eine Kraft F_{Bx} eines Gurtes in x-Richtung eine Reibungskraft F_{CF} (CF = Coulomb-Friction = Coulomb-Reibung; F_{CF} = µ_{C}F_{N}; µ_{C} = Reibungskoeffizient zwischen Textilien und Textilien oder Leder) entsteht, die ein Heraufrutschen des Insassen an der Seitenwangenkontur verhindert. In Fig. 4b ist eine Darstellung wiedergegeben, bei der ein Winkel α nahezu 90° beträgt (was theoretisch erreichbar ist), so dass durch die steile Seitenwange 300 eine sehr gute Rückhaltewirkung erzielt wird. Hierdurch kann eine sehr starke Rückhaltekraft bewirkt werden, so dass der Insasse optimal in der gewünschten Position gehalten werden kann.

Während der Verstellung der Seitenhaltkontur kann es auch vorteilhaft sein, beispielsweise mittels geeigneten (Druck-) Sensoren oder durch Messung des Stromanstiegs beim Elektromotor zu detektieren, ob ein erhöhter Widerstand gegen die Verstellung vorliegt. Auf diese Weise könnte das Einklemmen von Insassen oder Misuse erkannt und verhindert werden.

In Komfortsystemen sind daher zur Verstellung der Seitenwangen sowohl elektromotorische Aktuatoren als auch pneumatische Aktuatoren verwendbar. Diese Aktuatoren sollten wie folgt abgeändert werden:
- Die Verstellgeschwindigkeit sollte so groß sein, dass die Seitenwangen innerhalb einer Vorwarnzeit von der Erkennung eines bevorstehenden Unfalls bis zur tatsächlichen Kollision um den geforderten Weg verstellt werden können. Beispielsweise sollten die Seitenwangen mit einer Geschwindigkeit von weniger als 2 Sekunden, besser noch mit einer Geschwindigkeit von weniger als 800 ms in die Zielposition ausgefahren werden können.
- Die Festigkeit und Robustheit der Aktuatoren sollte ausreichen, um die Crash bzw. Unfallkräfte aufnehmen und in die Sitzstruktur ableiten können.
- Es sollte eine Kraftbegrenzung (beispielsweise in der Positioiniereinheit) vorgesehen werden, um zu verhindern, dass ein Insasse aufgrund der Rückhaltekräfte verletzt wird.

Daneben können vorteilhafterweise auch Maßnahmen getroffen werden, um den Verstellweg der Seitenwangen zu detektieren. Dies ist am Aktuator z.B. mittels Drucksensor oder Hallsensor möglich oder aber direkt über kapazitive oder induktive Wegmessung, Potentiometer oder auch Endabschaltungen durch Kraftbegrenzung, Lichtschranken oder Reed-Kontakten.

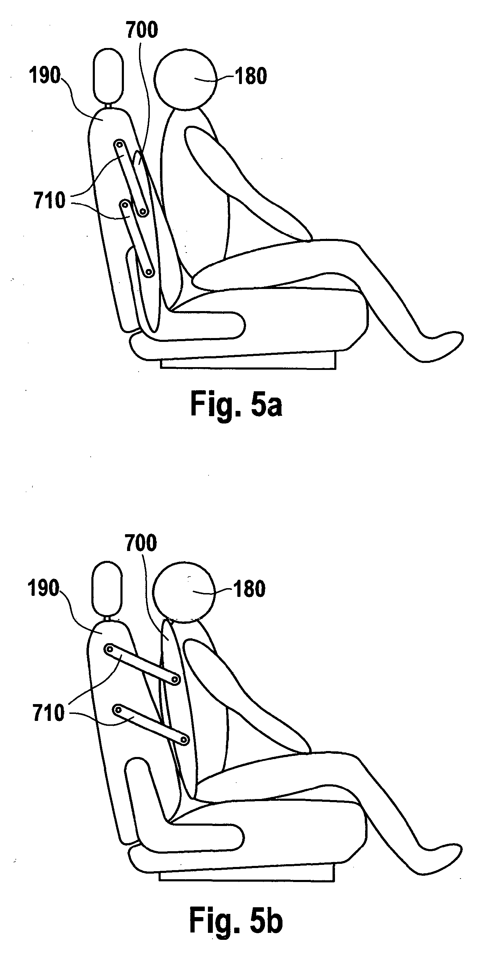

Fig. 5 zeigt ein weiteres Ausführungsbeispiel der vorliegenden Erfindung als Haltevorrichtung. Hierbei ist in der Rückenlehne des Fahrzeugsitzes 190 das Halteelement 700 in einer Ausgangslage vorgesehen (siehe Fig. 5a), welches unmittelbar vor einem Unfall aus der Rückenlehne 190 durch eine Positionierungseinheit 710 ausgeklappt wird und dem Fahrzeuginsassen 180 einen zusätzlichen seitlichen Halt gibt (siehe Fig. 5b).

Das Ausklappen kann durch eine Realisierung der Vorrichtung zur Verbesserung des Seitenhalts mittels eines Federsystems 710 als Positionierungseinheit erfolgen. In der Normalposition (Fig. 5a) ist die Seitenwange 700 dann in einer komfortablen Position. Durch die Aktivierung einer vorgespannten Feder nach einem Auslösesignal wird die Seitenwange 700 ausgefahren (Fig. 5b).

Auch kann ist es besonders vorteilhaft, dass die Verstellung des Halteelementes in den vorstehend dargestellten Ausführungsbeispielen nach Auslösung des Precrash-Status jederzeit abgebrochen werden kann. Wenn dem System nach Auslösung des Precrash-Status Informationen zur Verfügung stehen, die eine sichere Aussage erlauben, dass der erwartete Crash nicht eintritt, dann wird der Verstellvorgang abgebrochen und die Seitenwange(n) wird/werden wieder in den Ausgangszustand oder einen gespeicherten benutzerspezifischen Wunschzustand gebracht. Je länger die Vorwarnzeit ist, desto unsicherer ist die Crash- bzw. Unfallvorhersage. Wird zu schnell und zu früh der Precrash-Status gesetzt, treten Fehlauslösungen beispielsweise von irreversiblen Rückhaltemitteln auf. Wenn eine solche Fehlauslösung vom System schnell genug erkannt wird und der Verstellvorgang abgebrochen werden kann, vermindert dies die Beeinträchtigung des Insassen durch Fehlauslösungen. Zum einen führt dies zu einer höheren Akzeptanz des Systems und zum anderen bietet sich dadurch die Möglichkeit die Vorwarnzeit zu vergrößern ohne die negativen Beeinträchtigungen von Fehlauslösungen zu groß werden zu lassen.

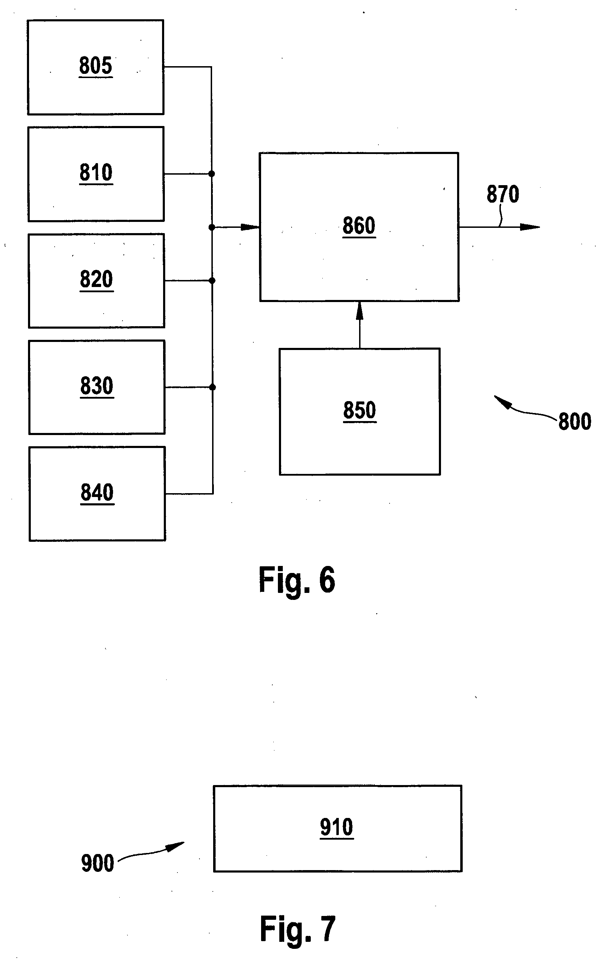

Eine vorteilhafte Ausführung der Erfindung in Form eines Auslösealgorithmus für ein Verfahrens 800 zur Verbesserung der Auslösung von Komponenten des übrigen, nicht reversiblen Rückhaltesystems (Airbags und Gurte) ist im Folgenden unter Zuhilfenahme von Fig. 6 gezeigt. Die Fig. 6 zeigt dabei ein Wirkungszusammenhangsdiagramm des genannten Verfahrens 800 als Ausführungsbeispiels der vorliegenden Erfindung. Neben der Erfassung von Crash- bzw. Unfallsignalen (beispielsweise aus dem Unfallbeschleunigungssensor 805 in y-Richtung, dem Unfalldrucksensor 810, einem Unfallbeschleunigungssensor 820 der ECU in y-Richtung), Umfeldsignalen aus einer Umfeldsensorik 830 sowie weiteren Unfallsignalen aus einer weiteren Unfallsensorik 840 wird auch der Status 850 des ESA bzw. der Haltevorrichtung (beispielsweise die Position der Seitenwange 300 oder 700 oder der Grad der Umschließung des Insassen) erfasst und über ein entsprechendes Signal in die Berechnung bzw. Steuerung 860 des Auslösesignals 870 beispielsweise für einen Gurtstraffer oder einen Seitenairbag einbezogen.

Dieses Einbeziehen des Status der Haltevorrichtung in die Bestimmung der Auslösung 860 der Rückhaltemittel hat im Wesentlichen zwei Vorteile:
- Erstens, kann die "Time-to-Fire" (d.h. die Zeit bis zur Auslösung des Rückhaltemittels) und somit das Zusammenspiel mit den anderen Rückhaltemitteln optimiert werden (mit ausgefahrener ESA bzw. Haltevorrichtung bewegt sich der Insasse anders).
- Zweitens kann auch die Robustheit der Klassifikations-Entscheidung in Abhängigkeit des ESA-Status positiv beeinflusst werden. Dies kann geschehen, indem beispielsweise die "Feuerschwelle" bei ausgefahrener ESA angehoben wird: Durch die verbesserte laterale Rückhaltewirkung kann der Airbag etwas später ausgelöst werden, d.h. die Auslöseentscheidung basiert auf mehr Messwerten und ist somit robuster. Eventuell braucht sogar ein Rückhaltemittel nicht aktiviert werden, wodurch sich dann Reparaturkosten einsparen ließen.

Weiterhin umfasst die vorliegende Erfindung auch ein (gemäß Fig. 7 als Ablaufdiagramm dargestelltes) Verfahren 900 zum Halten eines Fahrzeuginsassen in einem Fahrzeugsitz, wobei sich der Schwerpunkt des Fahrzeuginsassen in einem vorbestimmten Schwerpunktbereich über einer Fahrzeugsitzfläche befindet, wenn der Insasse auf dem Fahrzeugsitz sitzt und wobei das Verfahren den Schritt des Ausfahrens 910 eines Halteelementes aus einer Ausgangslage in eine Zielposition umfasst, ansprechend auf ein Aktivierungssignal, wobei das Ausfahren derart erfolgt, dass das Halteelement in eine Zielposition seitlich des Fahrzeugsitzes gebracht wird und wobei das Halteelement in der Zielposition in einer Höhe über der Fahrzeugsitzfläche angeordnet ist, so dass es in der Zielposition den Schwerpunktbereich zumindest teilweise seitlich überdeckt.

## Patentansprüche

1. Haltevorrichtung (195) zum Halten eines Fahrzeuginsassen (180) in einem Fahrzeugsitz (190), wobei sich der Schwerpunkt (S) des Fahrzeuginsassen (180) in einem vorbestimmten Schwerpunktbereich (330) über einer Fahrzeugsitzfläche befindet, wenn der Fahrzeuginsasse (180) auf dem Fahrzeugsitz (190) sitzt und wobei die Haltevorrichtung (195) die folgenden Merkmale umfasst:
- ein Halteelement, das ausgebildet ist, um den Fahrzeuginsassen (180) bei einem Unfall des Fahrzeugs in einer vorbestimmten Position auf dem Fahrzeugsitz (190) zu halten; und
- eine Positionierungseinheit (305, 710), die ausgebildet ist, um ansprechend auf ein Aktivierungssignal das Halteelement (300, 700) von einer Ausgangsposition in eine Zielposition seitlich des Fahrzeugsitzes zu bringen, wobei das Halteelement (300, 700) in der Zielposition in einer Höhe über der Fahrzeugsitzfläche angeordnet ist, so dass es in der Zielposition den Schwerpunktbereich (330) seitlich zumindest teilweise überdeckt
**dadurch gekennzeichnet, dass**
die Positionierungseinheit (305, 710) ausgebildet ist, um das Halteelement (300, 700) aus der Zielposition wieder in die Ausgangsposition zurückzubringen.

2. Haltevorrichtung (195) gemäß Anspruch 1, **dadurch gekennzeichnet, dass** die Positionierungseinheit (305, 710) ausgebildet ist, um das Halteelement (300, 700) in eine Zielposition zu bringen, so dass das Halteelement (300, 700) in der Zielposition den Schwerpunktbereich (330) seitlich zumindest teilweise überdeckt, in dem sich der Schwerpunkt (S) von zumindest 80 Prozent, insbesondere von mindestens 95 Prozent, der als Fahrzeuginsassen (180) auf dem Fahrzeugsitz (190) in Betracht kommenden Personen befindet.

3. Haltevorrichtung (195) gemäß einem der Ansprüche 1 oder 2, **dadurch gekennzeichnet, dass** die Positionierungseinheit (305, 710) ausgebildet ist, um das Halteelement (300, 700) in einer Bewegung mit einer gekrümmten Trajektorie, insbesondere in einer sichelförmigen Bewegung in die Zielposition zu bringen.

4. Haltevorrichtung (195) gemäß einem der Ansprüche 1 bis 3, **dadurch gekennzeichnet, dass** die Positionierungseinheit (305, 710) ausgebildet ist, um das Halteelement (300, 700) nacheinander in zwei unterschiedliche Richtungen zu bewegen.

5. Haltevorrichtung (195) gemäß Anspruch 4, **dadurch gekennzeichnet, dass** die Positionierungseinheit (305, 710) ausgebildet ist, um das Halteelement (300, 700) in einer ersten Bewegung von dem Fahrzeugsitz (190) weg zu bewegen und in einer zweiten Bewegung wieder zum Fahrzeugsitz (190) hin zu bewegen, wobei sich zumindest ein Teil des Halteelementes (300, 700) nach der zweiten Bewegung in der Zielposition befindet, um den Fahrzeuginsassen (180) in der vorbestimmten Position zu halten.

6. Haltevorrichtung (195) gemäß einem der Ansprüche 1 bis 5, **dadurch gekennzeichnet, dass** das die Positionierungseinheit (305, 710) ausgebildet ist, um das Halteelement (300, 700) aus einer Rückenlehne oder einer Sitzfläche des Fahrzeugsitzes (190) auszufahren.

7. Haltevorrichtung (195) gemäß einem der Ansprüche 1 bis 6, **dadurch gekennzeichnet, dass** die Positionierungseinheit (305, 710) ausgebildet ist, um das Halteelement (300, 700) in der Zielposition derart zu positionieren, dass es eine der Fahrzeugsitzfläche oder der Rückenlehne zugewandten Flanke aufweist, die in Bezug zur Fahrzeugsitzfläche oder einer Rückenlehne in einem Winkel von mehr als 45 Grad, insbesondere in einem Winkel von mehr als 80 bis 85 Grad angeordnet ist.

8. Haltevorrichtung (195) gemäß einem der Ansprüche 1 bis 7, **dadurch gekennzeichnet, dass** die Positionierungseinheit (305, 710) ausgebildet ist, um das Halteelement (300, 700) in einer Zeitspanne von höchstens 2 Sekunden, insbesondere in einer Zeitspanne von höchstens 800 Millisekunden von einer Ausgangslage in die Zielposition zu bringen.

9. Haltevorrichtung (195) gemäß einem der Ansprüche 1 bis 8, **dadurch gekennzeichnet, dass** die Positionierungseinheit (305, 710) ausgebildet ist, um beim Ausfahren des Halteelementes (300, 700) einen Widerstand gegen das Ausfahren zu detektieren und das weitere Ausfahren oder Stoppen des Ausfahrens des Halteelementes (300, 700) auf der Basis des erfassten Widerstandes durchzuführen.

10. Haltevorrichtung (195) gemäß einem der Ansprüche 1 bis 9, **dadurch gekennzeichnet, dass** sie ferner ein zweites Halteelement (300, 700) aufweist, das ausgebildet ist, um den Fahrzeuginsassen (180) in einer vorbestimmten Position auf dem Fahrzeugsitz (190) zu halten und wobei die Positionierungseinheit (305, 710) ferner ausgebildet ist, um ansprechend auf das Aktivierungssignal das zweite Halteelement (300, 700) in eine der Zielposition bezüglich des Fahrzeugsitzes (190) gegenüberliegende zweite Zielposition seitlich des Fahrzeugsitzes (190) zu bringen, wobei sich das zweite Halteelement (300, 700) in der zweiten Zielposition in einer Höhe über der Fahrzeugsitzfläche befindet, so dass es in der zweiten Zielposition den Schwerpunktbereich (330) seitlich zumindest teilweise überdeckt.

11. Verfahren (900) zum Halten eines Fahrzeuginsassen (180) in einem Fahrzeugsitz, wobei sich der Schwerpunkt (S) des Fahrzeuginsassen (180) in einem vorbestimmten Schwerpunktbereich (330) über einer Fahrzeugsitzfläche befindet, wenn der Fahrzeuginsasse (180) auf dem Fahrzeugsitz (190) sitzt und wobei das Verfahren (900) den folgenden Schritt umfasst:
- Ausfahren (910) eines Halteelementes (300, 700) aus einer Ausgangslage in eine Zielposition, ansprechend auf ein Aktivierungssignal, wobei das Ausfahren (910) derart erfolgt, dass das Halteelement (300, 700) in eine Zielposition seitlich des Fahrzeugsitzes (190) gebracht wird und wobei das Halteelement (300, 700) in der Zielposition in einer Höhe über der Fahrzeugsitzfläche angeordnet ist, so dass es in der Zielposition den Schwerpunktbereich (330) seitlich zumindest teilweise überdeckt **gekennzeichnet durch**
folgenden Schritt:
- Zurückbringen des Halteelementes (300, 700) aus der Zielposition in die Ausgangslage.

## Claims

1. Holding device (195) for holding a vehicle passenger (180) in a vehicle seat (190), wherein the centre of gravity (S) of the vehicle passenger (180) is located within a predetermined centre of gravity range (330) above a vehicle seat surface when the vehicle passenger (180) is sitting on the vehicle seat (190), and wherein the holding device (195) comprises the following features:
- a holding element which is designed in order to hold the vehicle passenger (180) in a predetermined position on the vehicle seat (190) in the event of an accident of the vehicle; and
- a positioning unit (305, 710) which is designed in order, in response to an activating signal, to bring the holding element (300, 700) from a starting position into a target position to the side of the vehicle seat, wherein, in the target position, the holding element (300, 700) is arranged at a height above the vehicle seat surface such that, in the target position, said holding element at least partially laterally covers the centre of gravity range (330),
**characterized in that** the positioning unit (305, 710) is designed in order to bring the holding element (300, 700) back out of the target position again into the starting position.

2. Holding device (195) according to Claim 1, **characterized in that** the positioning unit (305, 710) is designed in order to bring the holding element (300, 700) into a target position such that, in the target position, the holding element (300, 700) at least partially laterally covers the centre of gravity range (330) in which the centre of gravity (S) of at least 80 per cent, in particular of at least 95 per cent, of the individuals suitable as vehicle passengers (180) on the vehicle seat (190) is located.

3. Holding device (195) according to either of Claims 1 and 2, **characterized in that** the positioning unit (305, 710) is designed in order to bring the holding element (300, 700) into the target position with a movement having a curved trajectory, in particular with a sickle-shaped movement.

4. Holding device (195) according to one of Claims 1 to 3, **characterized in that** the positioning unit (305, 710) is designed in order to move the holding element (300, 700) successively in two different directions.

5. Holding device (195) according to Claim 4, **characterized in that** the positioning unit (305, 710) is designed in order to move the holding element (300, 700) away from the vehicle seat (190) in a first movement and to move the holding element towards the vehicle seat (190) again in a second movement, wherein at least part of the holding element (300, 700) is in the target position after the second movement in order to hold the vehicle passenger (180) in the predetermined position.

6. Holding device (195) according to one of Claims 1 to 5, **characterized in that** the positioning unit (305, 710) is designed in order to extend the holding element (300, 700) out of a backrest or a seat surface of the vehicle seat (190).

7. Holding device (195) according to one of Claims 1 to 6, **characterized in that** the positioning unit (305, 710) is designed in order to position the holding element (300, 700) in the target position in such a manner that said holding element has a flank which faces the vehicle seat surface or the backrest and is arranged at an angle of more than 45 degrees, in particular at an angle of more than 80 to 85 degrees, with respect to the vehicle seat surface or a backrest.

8. Holding device (195) according to one of Claims 1 to 7, **characterized in that** the positioning unit (305, 710) is designed in order to bring the holding element (300, 700) from a starting position into the target position within a period of time of at maximum 2 seconds, in particular within a period of time of at maximum 800 milliseconds.

9. Holding device (195) according to one of Claims 1 to 8, **characterized in that** the positioning unit (305, 710) is designed in order, during the extension of the holding element (300, 700), to detect a resistance to the extension and to carry out the further extension or stopping of the extension of the holding element (300, 700) on the basis of the detected resistance.

10. Holding device (195) according to one of Claims 1 to 9, **characterized in that** the holding device furthermore has a second holding element (300, 700) which is designed in /order to hold the vehicle passenger (180) in a predetermined position on the vehicle seat (190), and wherein the positioning unit (305, 710) is furthermore designed in order, in response to the activating signal, to bring the second holding element (300, 700) into a second target position to the side of the vehicle seat (190), said second target position being opposite the target position with respect to the vehicle seat (190), wherein, in the second target position, the second holding element (300, 700) is located at a height above the vehicle seat surface such that, in the second target position, said holding element at least partially laterally covers the centre of gravity range (330).

11. Method (900) for holding a vehicle passenger (180) in a vehicle seat, wherein the centre of gravity (S) of the vehicle passenger (180) is located within a predetermined centre of gravity range (330) above a vehicle seat surface when the vehicle passenger (180) is sitting on the vehicle seat (190), and wherein the method (900) comprises the following step:
- extending (910) a holding element (300, 700) from a starting position into a target position in response to an activating signal, wherein the extension (910) takes place in such a manner that the holding element (300, 700) is brought into a target position to the side of the vehicle seat (190), and wherein, in the target position, the holding element (300, 700) is arranged at a height above the vehicle seat surface such that, in the target position, said holding element at least partially laterally covers the centre of gravity range (330), **characterized by** the following step:
- bringing the holding element (300, 700) back out of the target position into the starting position.

## Revendications

1. Dispositif de retenue (195) pour retenir un passager de véhicule (180) dans un siège de véhicule (190), le centre de gravité (S) du passager de véhicule (180) se trouvant dans une région de centre de gravité prédéterminée (330) au-dessus d'une surface du siège de véhicule lorsque le passager de véhicule (180) est assis sur le siège de véhicule (190) et le dispositif de retenue (195) comprenant les caractéristiques suivantes :
- un élément de retenue réalisé pour retenir le passager de véhicule (180) en cas d'accident du véhicule dans une position prédéterminée sur le siège de véhicule (190) ; et
- une unité de positionnement (305, 710) réalisée pour amener, en réponse à un signal d'activation, l'élément de retenue (300, 700) d'une position de départ dans une position cible latéralement au siège de véhicule, l'élément de retenue (300, 700) étant disposé dans la position cible à une hauteur au-dessus de la surface du siège de véhicule de telle sorte qu'il recouvre latéralement au moins partiellement, dans la position cible, la région de centre de gravité (330),
**caractérisé en ce que**
l'unité de positionnement (305, 710) est réalisée de manière à ramener l'élément de retenue (300, 700) depuis la position cible à nouveau dans la position de départ.

2. Dispositif de retenue (195) selon la revendication 1, **caractérisé en ce que** l'unité de positionnement (305, 710) est réalisée afin d'amener l'élément de retenue (300, 700) dans une position cible, de telle sorte que l'élément de retenue (300, 700), dans la position cible, recouvre latéralement au moins partiellement la région de centre de gravité (330), dans laquelle se trouve le centre de gravité (S) d'au moins 80 %, notamment d'au moins 95 % des personnes considérées en tant que passagers de véhicule (180) sur le siège de véhicule (190).

3. Dispositif de retenue (195) selon l'une quelconque des revendications 1 ou 2, **caractérisé en ce que** l'unité de positionnement (305, 710) est réalisée afin d'amener l'élément de retenue (300, 700) dans la position cible par un mouvement de trajectoire courbe, notamment un mouvement en forme de croissant.

4. Dispositif de retenue (195) selon l'une quelconque des revendications 1 à 3, **caractérisé en ce que** l'unité de positionnement (305, 710) est réalisée afin de déplacer l'élément de retenue (300, 700) successivement dans deux directions différentes.

5. Dispositif de retenue (195) selon la revendication 4, **caractérisé en ce que** l'unité de positionnement (305, 710) est réalisée afin de déplacer l'élément de retenue (300, 700), au cours d'un premier déplacement, à l'écart du siège de véhicule (190), et au cours d'un deuxième déplacement, à nouveau vers le siège de véhicule (190), au moins une partie de l'élément de retenue (300, 700) se trouvant après le deuxième déplacement dans la position cible, afin de retenir le passager de véhicule (180) dans la position prédéterminée.

6. Dispositif de retenue (195) selon l'une quelconque des revendications 1 à 5, **caractérisé en ce que** l'unité de positionnement (305, 710) est réalisée pour déplacer l'élément de retenue (300, 700) hors d'un dossier ou d'une surface du siège de véhicule (190).

7. Dispositif de retenue (195) selon l'une quelconque des revendications 1 à 6, **caractérisé en ce que** l'unité de positionnement (305, 710) est réalisée pour positionner l'élément de retenue (300, 700) dans la position cible, de telle sorte qu'il présente un flanc tourné vers la surface du siège de véhicule ou vers le dossier, lequel flanc est disposé par rapport à la surface du siège de véhicule ou par rapport à un dossier suivant un angle de plus de 45°, en particulier suivant un angle de plus de 80 à 85°.

8. Dispositif de retenue (195) selon l'une quelconque des revendications 1 à 7, **caractérisé en ce que** l'unité de positionnement (305, 710) est réalisée pour amener l'élément de retenue (300, 700) pendant un intervalle de temps de 2 secondes au maximum, notamment pendant un intervalle de temps de 800 ms au maximum, d'une position de départ dans la position cible.

9. Dispositif de retenue (195) selon l'une quelconque des revendications 1 à 8, **caractérisé en ce que** l'unité de positionnement (305, 710) est réalisée pour détecter, lors de la sortie de l'élément de retenue (300, 700), une résistance à la sortie, et pour mettre en oeuvre la poursuite de la sortie ou l'arrêt de la sortie de l'élément de retenue (300, 700) sur la base de la résistance détectée.

10. Dispositif de retenue (195) selon l'une quelconque des revendications 1 à 9, **caractérisé en ce qu'**il présente en outre un deuxième élément de retenue (300, 700) qui est réalisé pour retenir le passager de véhicule (180) dans une position prédéterminée sur le siège de véhicule (190) et l'unité de positionnement (305, 710) étant en outre réalisée pour amener, en réponse au signal d'activation, le deuxième élément de retenue (300, 700) dans une deuxième position cible latéralement au siège de véhicule (190), opposée à la position cible par rapport au siège de véhicule (190), le deuxième élément de retenue (300, 700), dans la deuxième position cible, se trouvant à une hauteur au-dessus de la surface du siège de véhicule, de telle sorte qu'il recouvre latéralement au moins en partie la région de centre de gravité (330) dans la deuxième position cible.

11. Procédé (900) pour retenir un passager de véhicule (180) dans un siège de véhicule, le centre de gravité (S) du passager de véhicule (180) se trouvant au-dessus d'une surface de siège de véhicule dans une région de centre de gravité prédéterminée (330) lorsque le passager de véhicule (180) est assis sur le siège de véhicule (190), et le procédé (900) comprenant l'étape suivante :
- sortir (910) un élément de retenue (300, 700) d'une position de départ dans une position cible, en réponse à un signal d'activation, la sortie (910) s'effectuant de telle sorte que l'élément de retenue (300, 700) soit amené dans une position cible latéralement au siège de véhicule (190) et l'élément de retenue (300, 700) étant disposé dans la position cible à une hauteur au-dessus de la surface du siège de véhicule de telle sorte qu'il recouvre, dans la position cible, latéralement au moins en partie la région de centre de gravité (330), **caractérisé par** l'étape suivante :
- ramener l'élément de retenue (300, 700) de la position cible dans la position de départ.
